# EUROPÄISCHE PATENTSCHRIFT

(11) **EP 1 928 214 B1**
(45) Veröffentlichungstag und Bekanntmachung des Hinweises auf die Patenterteilung: **27.05.2009**
(21) Anmeldenummer: 06024835.8
(22) Anmeldetag: 30.11.2006
(51) Int. Cl.: H05B 1/02, H05B 3/12, B60H 1/22

(54) **Elektrische Heizvorrichtung**
Electrical heating device
Dispositif de chauffage électrique

(43) Veröffentlichungstag der Anmeldung: 04.06.2008
(73) Patentinhaber: Eberspächer catem GmbH & Co. KG, 76863 Herxheim bei Landau (DE)
(72) Erfinder: Bohlender, Franz, 76870 Kandel (DE); Zeyen, Michael, 76863 Herxheim-Hayna (DE)
(74) Vertreter: Grünecker, Kinkeldey, Stockmair & Schwanhäusser Anwaltssozietät

(56) Entgegenhaltungen:
- EP-A- 1 516 761
- EP-A- 1 630 013
- EP-A- 1 630 923
- EP-A1- 1 452 357
- WO-A-03/086018

## Beschreibung

Die vorliegende Erfindung betrifft eine elektrische Heizvorrichtung gemäß dem Oberbegriff von Anspruch 1. Eine solche Heizvorrichtung ist beispielsweise aus der WO 03/086018 bekannt. Ähnliche Heizvorrichtungen offenbaren die EP-A-1 630 013; die EP-A-1 452 357, die EP-A-1 630 923 und die EP-A-1 516 761.

Bei diesem vorbekannten Stand der Technik ist eine Steuereinrichtung in einem im Wesentlichen umfänglich geschlossenen Gehäuse gehalten, welches mit einer Halteinrichtung verbunden ist, die einen Schichtaufbau, umfassend mehrere wärmeerzeugende Elemente und zwischen diesen angeordnete wärmeabgebende Elemente umfasst. Das Gehäuse ist hierbei Teil der elektrischen Heizvorrichtung und nimmt die Steuereinrichtung in sich auf. Das Gehäuse dient dabei dem mechanischen Schutz der Steuereinrichtung und bildet ferner Durchlässe bzw. Steckerplätze zum elektrischen Anschluss der elektrischen Heizvorrichtung bzw. für den Anschluss von Signalleitungen zu der Steuereinrichtung aus.

Bei der gattungsgemäßen elektrischen Heizvorrichtung können die einzelnen Lagen des Schichtaufbaus miteinander verklebt und/oder unter Vorspannung einer Feder gegeneinander verpresst sein, insbesondere dann, wenn der Schichtaufbau in einem die Halteeinrichtung bildenden geschlossenen Rahmen aufgenommen ist. Einzelne elektrische wärmeerzeugende Elemente sind in der Halterichtung voneinander isoliert gehalten und in der Regel an einer Stirnseite des Schichtaufbaus, zum Beispiel in Längsrichtung des Schichtaufbaus mit elektrischen Kontaktelementen versehen, über welche bestimmte wärmeerzeugende Elemente elektrisch an das Bordnetz des Fahrzeugs angeschlossen werden können.

Zur Bildung der wärmeerzeugenden Elemente kommen in der Regel Widerstandsheizelemente, so genannte PTC-Heizelemente zum Einsatz, bei denen aufgrund ihrer Regelungscharakteristik eine Überhitzung der wärmeerzeugenden Elemente sicher vermieden wird. Jedes wärmeerzeugende Element besteht üblicherweise aus mehreren in Längsrichtung des Schichtaufbaus hintereinander angeordneten PTC-Heizelementen. Diese liegen flächig an einer elektrisch leitenden und in der Regel gut Wärme leitenden Oberfläche an, über welche die wärmeerzeugenden Elemente bestromt werden und die erzeugte Wärme wärmeleitend abgeführt wird. Diese ebene Fläche wird regelmäßig durch die wärmeabgebenden Elemente gebildet, die hierzu an ihrer Außenseite ein an einem wärmeerzeugenden Element anliegendes Blechband haben, welches als separates Bauteil oder integral mit sich im Wesentlichen quer zum Schichtaufbau erstreckenden Heizrippen bzw. -lamellen verbunden ist. Sofern die ebene Fläche durch ebene Blechbänder gebildet wird, werden diese in der Regel den wärmeerzeugenden Elementen zugeordnet. Die Blechbänder können hierbei mit den PTC-Heizelementen eine vorgefertigte Einheit bilden.

Zur Steuerung bzw. Regelung der elektrischen Heizvorrichtung hat diese eine Steuereinheit, welche die wärmeerzeugenden Elemente ansteuert. Die Steuereinrichtung kann hierzu elektronische Steuerelemente und/oder herkömmliche Relais umfassen.

Der allgemeinen Tendenz in der Kraftfahrzeugindustrie folgend, werden auch die elektrischen Heizvorrichtungen für Kraftfahrzeuge als Baugruppen vorbereitet, was es mit sich bringt, dass Steuereinrichtung häufig als Teil der elektrischen Heizvorrichtung an der Halteeinrichtung derselben befestigt ist oder jedenfalls benachbart hierzu angeordnet wird. So ist es beispielsweise aus der EP 1 157 867 bekannt, eine Steuervorrichtung zur Steuerung der wärmeerzeugenden Elemente innerhalb des Rahmens anzuordnen und durch Leistungstransistoren auszubilden, die an ihrer dem Schichtaufbau zugewandten Seite Kühlrippen aufweisen. Eine ähnliche Anordnung ist aus der EP 1 492 384 bekannt, die ebenfalls als gattungsbildend angesehen werden kann und bei der die Steuereinrichtung in dem Rahmen aufgenommen und ebenfalls durch Leistungstransistoren gebildet ist. Auch hier besteht die Notwendigkeit, die von den Transistoren erzeugte Verlustwärme an die die elektrische Heizvorrichtung durchströmende Luft abzugeben, so dass die Steuereinrichtung innerhalb der Halteeinrichtung vorgesehen ist. Ein alternatives Lösungskonzept ist aus der eingangsgenannten EP 1 691 579 bekannt, bei welcher die Steuereinrichtung seitlich an dem Rahmen in einem separaten Gehäuse aufgenommen und überwiegend durch Schaltrelais gebildet ist, die keine Verlustwärme abgeben.

Die Anordnung der Steuereinrichtung in der Halteeinrichtung oder benachbart zu der Halteeinrichtung speziell bei einer Befestigung der Steuereinrichtung unmittelbar an der Halteeinrichtung bringt das Problem mit sich, dass beim Schalten entstehende Geräusche mit der beförderten Luft relativ ungehindert in den Fahrgastraum gelangen und dort von den Passagieren des Kraftfahrzeuges wahrgenommen werden. Von der Steuereinrichtung erzeugte Geräusche können aber auch beispielsweise über die Wandungen der Lüftungskanäle als Körperschall an den Innenraum weitergeleitet werden. Dabei können bereits relativ leichte akustische Störungen, die durch die Steuereinrichtung erzeugt werden, über die Wandungen der hohlen Lüftungskanäle verstärkt werden, so dass eine Schallbelästigung der Insassen des Fahrzeugs nicht nur dann zu befürchten ist, wenn althergebrachte mechanisch schaltende Relais in der Steuereinrichtung schalten.

Der vorliegenden Erfindung liegt das Problem zu Grunde, die Wirkung von störenden Schallgeräuschen auf die Fahrzeuginsassen zu reduzieren.

Zur Lösung dieses Problems wird erfindungsgemäß eine elektrische Heizvorrichtung mit den Merkmalen von Anspruch 1 angegeben.

Bevorzugte Weiterbildungen sind in den Unteransprüchen angegeben.

Bei der erfindungsgemäßen elektrischen Heizvorrichtung ist die Steuereinrichtung im wesentlichen von einem umfänglich geschlossenen schalldämpfenden Gehäuse umgeben. Dieses schalldämpfende Gehäuse kann die Steuereinrichtung vollständig oder nahezu vollständig umfänglich umgeben und ist so ausgebildet, dass von der Steuereinrichtung abgehende Schallwellen zumindest teilweise absorbiert werden. Absorbiert werden hierbei vorzugsweise sowohl diejenigen Schallwellen, die sich ansonsten als Körperschall verbreiten, wie auch solche, die von der durch die elektrische Heizvorrichtung strömenden Luft mitgeschleppt werden. Das schalldämpfende Gehäuse soll so ausgebildet sein, dass von der Steuereinrichtung erzeugte Schallwellen vorzugsweise unmittelbar an der Steuereinrichtung absorbiert werden. Die erfindungsgemäße elektrische Heizvorrichtung hat sich als besonders wirkungsvoll bei solchen Ausführungsformen erwiesen, bei denen die Steuereinrichtung seitlich an der Halteeinrichtung angeordnet und mit dieser verbunden ist. Insbesondere bei diesen Ausführungsformen besteht das Problem, dass Schallwellen, durch Körperschall und durch die durch die elektrische Heizvorrichtung hindurchgeführte Luft relativ ungehindert zu der Fahrgastzelle gelangen.

Weiter Vorteile und Einzelheiten der vorliegenden Erfindung ergeben sich aus der nachfolgenden Beschreibung eines Ausführungsbeispiels in Verbindung mit der Zeichnung. In dieser zeigen:
- Fig. 1: eine perspektivische Seitenansicht des Ausführungsbeispiels;
- Fig. 2: eine perspektivische Explosionsdarstellung des die Steuereinrichtung umgebenden Gehäuses des Ausführungsbeispiels;
- Fig. 3: eine perspektivische Draufsicht auf ein Gehäuseelement des Gehäuses nach Fig. 2;
- Fig. 4: eine perspektivische Draufsicht auf ein Innengehäuse des in den Figuren 1-3 gezeigten Ausführungsbeispiels und
- Fig. 5: eine Draufsicht auf das in Fig. 4 gezeigte Innengehäuse von der anderen Seite.

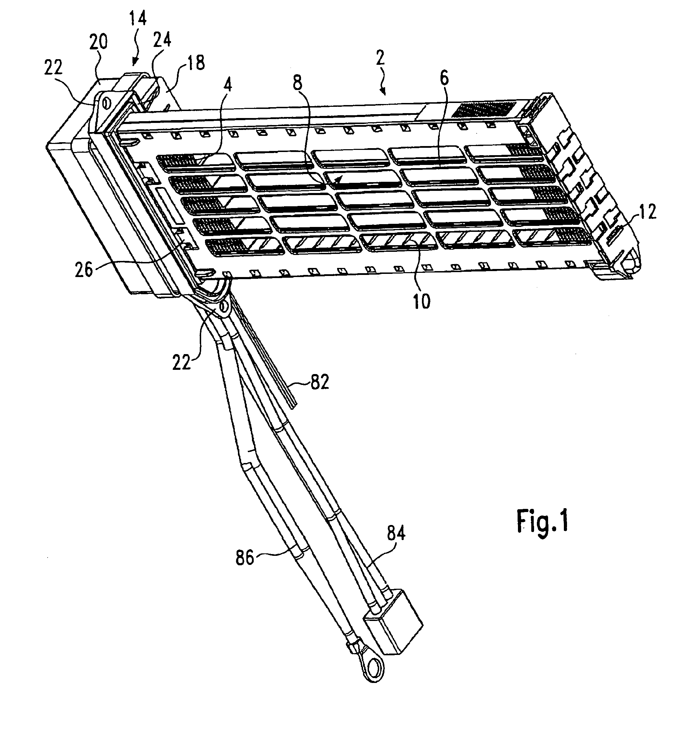

In Fig. 1 sind die wesentlichen Teile der elektrischen Heizvorrichtung gezeigt. Diese umfasst ein zweiteiliges Kunststoffgehäuse 2, in dem ein Schichtaufbau mit mehreren wärmeerzeugenden Elementen und dazwischen angeordneten wärmeabgebenden Elementen unter Vorspannung einer nachfolgend näher beschriebenen Federeinrichtung gehalten sind. Die wärmeabgebenden Elemente 4 sind als mäandrierend gebogene Blechstreifen erkennbar. Zwischen diesen und hinter Längsstreben 6, welche eine von dem Kunststoffgehäuse 2 gebildete Gehäuseöffnung 8 durchsetzen, befinden sich parallel zu den Längsstreben 6 verlaufende und nicht erkennbare wärmeerzeugende Elemente. Im mittleren Bereich der Gehäuseöffnung 8 ist der Schichtaufbau weggenommen und es ist ein Federstreifen 10 erkennbar, von dem nach Innen Federstege vorspringen. Der Federstreifen 10 ist durch einen stirnseitig ausgebildeten Einführschlitz 12 eingebracht, wie dies in der auf die Anmelderin zurückgehenden EP-A-1 432 287 beschrieben ist.

An dem den Schichtaufbau umgebenden Kunststoffgehäuse 2 ist stirnseitig ein schalldämpfendes Gehäuse 14 angeordnet. Das schalldämpfende Gehäuse 14 besteht aus einem im Wesentlichen eine Steuereinrichtung 16 aufnehmenden zweiten Gehäuseelement und einem zwischen diesem und dem Kunststoffgehäuse angeordneten ersten Gehäuseelement. Das erste Gehäuseelement ist mit dem Bezugszeichen 18 gekennzeichnet; das zweite Gehäuseelement mit dem Bezugszeichen 20. Das erste Gehäuseelement 18 ist sowohl mit dem zweiten Gehäuseelement 20 als auch mit dem Kunststoffgehäuse 2 verbunden.

Das erste Gehäuseelement 18 hat an seiner kunststoffgehäuseseitigen Unterseite Flanschsegmente 22 mit Bohrungen zur Befestigung des Ausführungsbeispiels an dem Lüftungskanal eines Kraftfahrzeuges. Darüber hinaus bildet das erste Gehäuseelement 18 an seiner Unterseite eine umlaufende Dichtnut 24 aus, die mit an dem Lüftungskanal ausgebildeten Stegen zusammenwirkt, um das in den Lüftungskanal eingeschobene und diesen querdurchsetzende Kunststoffgehäuse 2 nach Außen abzudichten. Von der Unterseite des ersten Gehäuseelementes 18 ragen ferner daran einteilig ausgebildete T-förmige Rastzungen 26 ab, die mit dem Kunststoffgehäuse 2 verrastet sind.

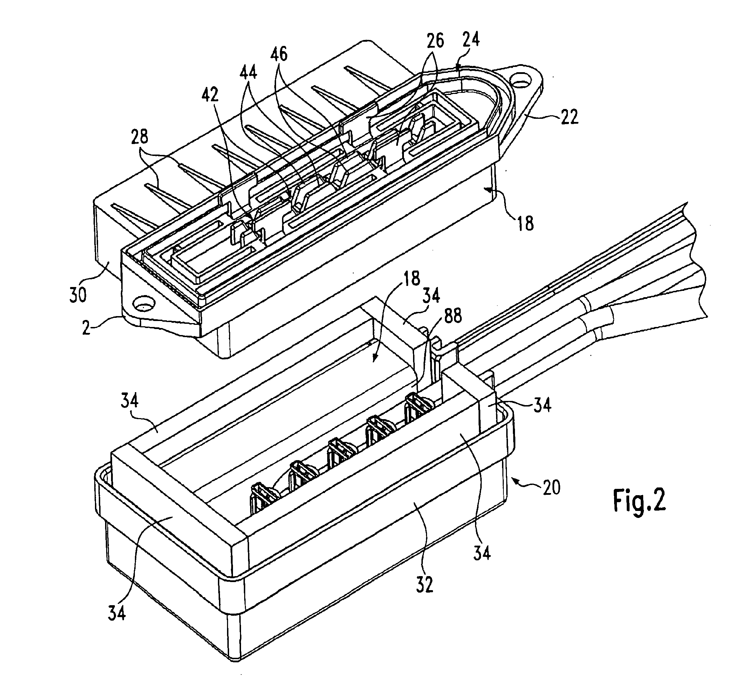

An der der Unterseite abgewandten Oberseite bildet das erste Gehäuseelement 18 einen über Versteifungsrippen 28 einteilig ausgebildeten und gegenüber den Flanschsegmenten 22 versteiften Gehäusedeckel 30 mit rechteckiger Grundfläche aus (Fig. 2).

Dieser Gehäusedeckel 30 passt zwischen einen außen an dem zweiten Gehäuseelement 20 umlaufenden Kragen 32 und in dem zweiten Gehäuseelement 20 aufgenommenen und dieses überragende Schalldämpfungsplatten 34. Neben den in Fig. 2 erkennbaren, umfänglich den Innenraum des schalldämpfenden Gehäuse 14 auskleidenden Schalldämpfungsplatten 34 können an der Innenseite des Gehäusedeckels 30 bzw. dem Boden des zweiten Gehäuseelementes 20 weitere Schalldämpfungsplatten vorgesehen sein. Bei dem gezeigten Ausführungsbeispiel ist indes der Boden des zweiten Gehäuseelements 20 nicht mit einer Dämpfungsplatte 34 belegt und hat eine nachstehend noch beschriebene Ausgestaltung. Der Gehäusedecke 30 kann eine Schalldämpfungsplatte haben, welche dicht an die Stirnseiten der umfänglich vorgesehenen Schalldämpfungsplatten 34 anliegt.

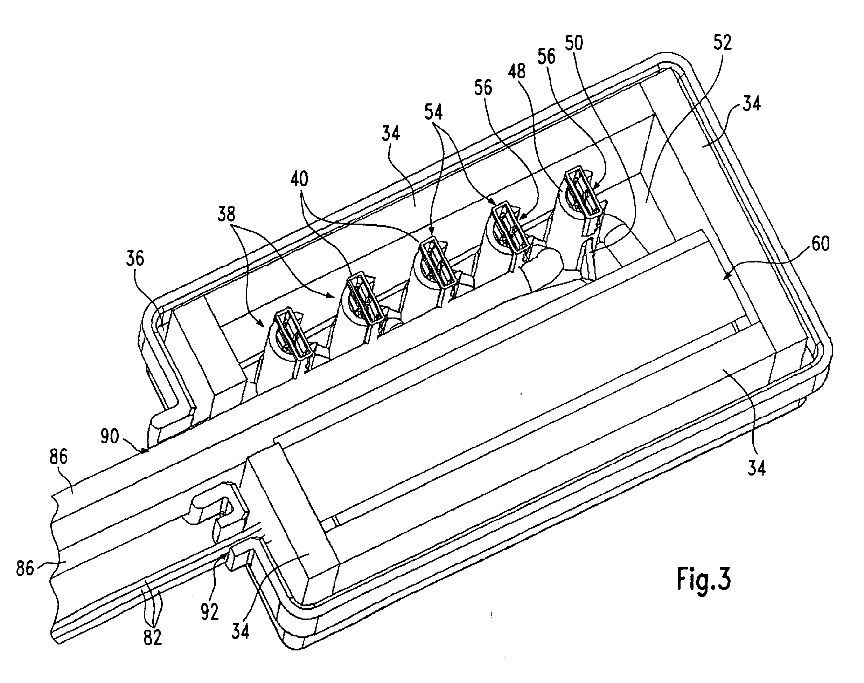

Die Schalldämpfungsplatten 34 sind aus einem geschäumten Kunststoff mit relativ hoher Dichte ausgeschnitten und passgenau in das zweite Gehäuseelement 20 eingesetzt. Die Schalldämpfungsplatten 34 haben bei dem gezeigten Ausführungsbeispiel eine Stärke von zwischen 4 mm und 6 mm, vorzugsweise eine Stärke von 5 mm. Als weitere Maßnahmen zur schalldämpfenden Kapselung des Innenraumes des schalldämpfenden Gehäuses 14 ist zwischen dem Kragen 32 und den umfänglich angeordneten Schalldämpfungsplatten 34 eine schalldämpfende Lage vorgesehen, beispielsweise in Form einer Einlegedichtung oder in Form eines mittels Zweikomponentenspritzgießen an dem ersten oder dem zweiten Gehäuseelement 18, 20 ausgebildeten Schalldämpfungselementes, welches nach Art eine Dichtlippe vorzugsweise stirnseitig an dem Gehäusedeckel 30 oder einem in Fig. 3 zu erkennenden, von dem Kragen 32 umfänglich umgebenen Dichtrand 36 des zweiten Gehäuseelementes 20 vorgesehen ist. Durch diese schalldämpfende Lage sind die beiden Gehäuseelemente 18, 20 schalldicht gegeneinander angelegt.

Wie der Fig. 3 zu entnehmen ist, ragen von einem Boden 52 des zweiten Gehäuseelementes 20 Halterungen 38 für elektrisch leitende Kontaktfedem 40 ab. In diese Kontaktfedem 40 greifen elektrisch mit den einzelnen wärmeerzeugenden Elementen verbundene Kontaktzungen ein, welche regelmäßig durch Blechbänder gebildet sind, die jedenfalls teilweise eine Anlegefläche für die PTC-Heizelemente bilden und über die Stirnseite des Kunststoffgehäuses 2 seitlich hinausgeführt sind. Hierzu weist das erste Gehäuseelement schlitzförmige Einbringöffnungen 42 auf, die in Fig. 2 dargestellt sind, zu denen quer durchbrochene Längsstege 44 einteilig an der Unterseite des ersten Gehäuseelementes 18 ausgespart sind, deren konisch zulaufende Stegränder 46 trichterförmig zu den Einbringöffnungen 42 führen und so das Einbringen der Kontaktzungen in die Einbringöffnungen 42 erleichtern. Wie der Darstellung in Fig. 3 zu entnehmen ist, sind die Halterung 38 durch geschlitzte Hülsen 48 gebildet, die fußseitig über Versteifungsrippen 50 gegenüber dem Boden 52 des zweiten Gehäuseelementes 20 versteift sind. Diese Hülsen 48 weisen einen in Verlängerung der Versteifungsrippen 50 ausgebildeten und die Hülse 48 nur teilweise durchsetzenden Querschlitz 54 auf. Des weiteren haben die Hülsen 48 einen rechtwinklig hierzu ausgesparten, sich bis nahe bis zu dem Boden 52 erstreckenden Kabelschlitz 56.

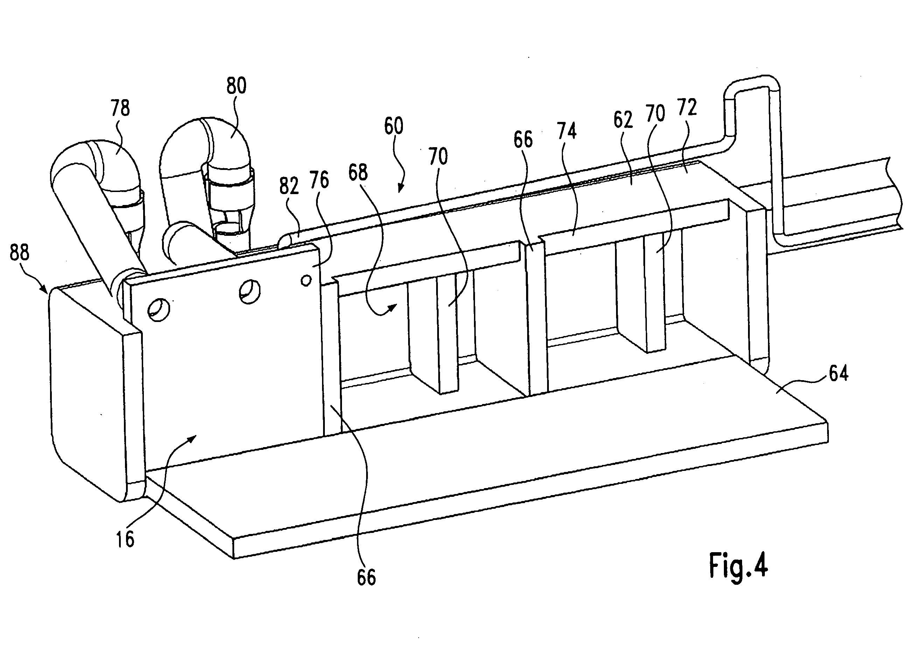

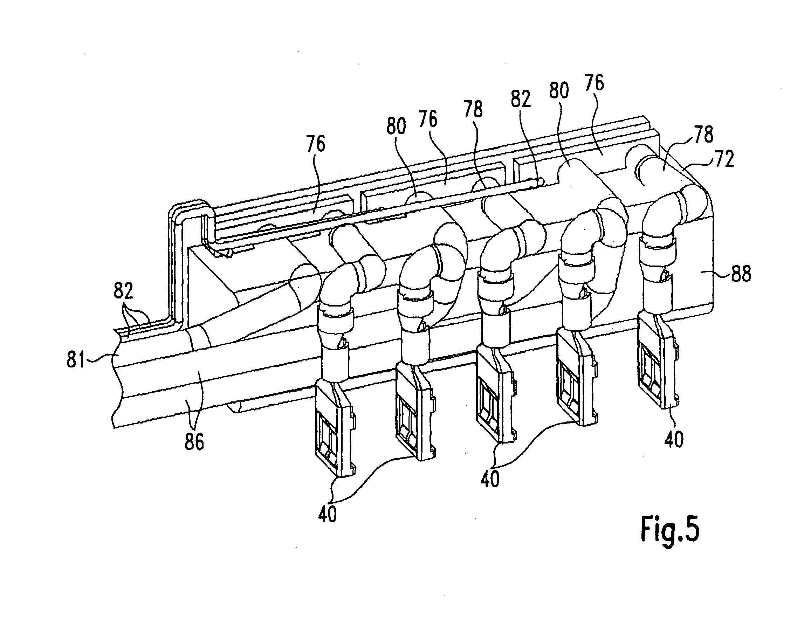

In das zweite Gehäuseelement 20 ist ein in den Figuren 4 und 5 näher dargestelltes Innengehäuse 60 eingesetzt. Das Innengehäuse ist vorzugsweise aus einem schalldämpfenden Material gebildet und ist beispielsweise ein aus einem geschäumten Kunststoff gebildetes Spritzgussteil. Das Innengehäuse 60 hat einen im Querschnitt im wesentlichen U-förmigen Innengehäusegrundkörper 62, an dem ein Innengehäusedeckel 64 verschwenkbar gelagert ist. Der Innengehäusegrundkörper 62 bildet drei durch Trennwände 66 getrennte Steuerelementaufnahmeräume 68 aus. Jeder Steuerelementaufnahmeraum 68 kann weitere schalldämpfende Trennwände aufweisen, die in Fig. 4 beispielhaft gezeigt und mit Bezugszeichen 70 gekennzeichnet sind. Die Stirnseite einer Seitenwand 72 des Innengehäusegrundkörpers 62 bildet Anlageflächen 74 für Leiterplatten 76 aus, welche von den sich rechtwinklig hierzu erstreckenden Trennwänden 66 überragt und voneinander getrennt werden. An diesen Anlageflächen 74 liegen die Leiterplatten 76 an, von denen in Fig. 4 beispielhaft lediglich eine Leiterplatte 76 gezeigt ist. Auf die Darstellung der übrigen Leiterplatten wurde verzichtet.

Es ist zu erkennen, dass die Stirnseite der Trennwände 66 und die Oberseite der Leiterplatte 76 in etwa höhengleich sind. Auf dieser Oberfläche liegt der geschlossene Innengehäusedeckel 64 an. Die Leiterplatte 76 und der Innengehäusedeckel 64 überragen die Seitenwand 72. Dieser überragende Teil der Leiterplatte 76 dient dem Anschluss von elektrischen Anschlussleitungen 78, 80 und Steuerleitungen 82. Von der Innenseite der jeweiligen Leiterplatten 76 ragen in den Figuren nicht erkennbare Steuerelemente, beispielsweise Relais in die Steuerelementaufnahmeräume 68 hinein. Die Steuerelemente zu jeder Leiterplatte 76 sind jeweils für sich in einem durch die Trennwände 66 getrennte und durch die weiteren Trennwände 72 unterteilten Steuerelementaufnahmeraum 68 aufgenommen.

Die zu den Leiterplatten 76 führenden Anschlussleitungen 80 sind durch Verlängern von einer zentralen Zuführleitung 84 gebildet. Zu dem Innengehäuse 60 führen des weiteren Masseleitungen 86. Diese Masseleitungen 86 sowie die von den Leiterplatten 76 abgehenden Anschlussleitungen 78 weisen jeweils endseitig je eine Kontaktfeder 40 auf, die elektrisch mit den entsprechenden Leitungen 78, 86 verbunden sind. Die an die Leiterplatten 76 angeschlossenen Leitungen 78, 80 erstrecken sich zunächst im Wesentlichen parallel zu der Seitenwand 72 und sind im Folgenden vor eine sich im eingebauten Zustand das Gehäuse 14 quer durchsetzende weitere Seitenwand 88 geführt.

Wie insbesondere Fig. 5 zu entnehmen ist, überragen die Leiteplatten 76 die jeweiligen Anschlussleitungen 78, 80 an der Anschlussstelle. Des weiteren überragt der Innengehäusedeckel 64 an dieser Stelle das Innengehäuse 60 wie auch die Leiterplatten 76. Das in Fig. 5 gezeigte Ausführungsbeispiel eines Innengehäuses 60 kann als vormontiertes Bauteil ausgebildet sein. Hierzu reicht es aus, dass der Innengehäusedeckel 64 an die Leiterplatten 76 angelegt ist. Es ist insbesondere nicht erforderlich, dass der Innengehäusedeckel 64 gegenüber dem Innengehäusegrundkörper 62 fixiert ist. Bei dem vorgefertigten Bauteil kann aber eine solche Fixierung verwirklicht sein.

Zur Befestigung des Innengehäuses 60 an den zweiten Gehäuseelement 20 weist dieses eine an dem Boden 52 vorgesehene Tasche auf, in welche der überragende Rand des Innengehäusedeckels 64 wie auch die Enden der Leiterplatten 76 beim Einschieben in das Gehäuse 14 einbringbar sind. In dieser in Fig. 3 gezeigten Anordnung liegt der Innengehäusedeckel 64 an der zugeordneten Schalldämpfungsplatte 34 an. Das vormontierte Innengehäuse 60 kontaktiert den aus Kunststoff gebildeten Boden 62 ausschließlich über die Stirnseite des Innengehäusedeckels 64, der aus einem schalldämmenden Material gebildet ist. Das schalldämmende Material ist ein silikonfreier Kunststoff, vorzugsweise ein relativ weicher Kunststoff, wie beispielsweise Polyurethan, der eine gewisse dämpfende Lagerung des Innengehäuses 60 über das das Innengehäuse 60 bildende Material gewährleistet. Als zweckmäßig hat sich ein Polyurethan-Kunststoff mit einer Härte ASHORE A von zwischen 50 und 90 erweisen. Die Tasche ist derart dimensioniert, dass der Innengehäusedeckel 64 zusammen mit den Leiterplatten 76 genau in die Tasche passt. Gegebenenfalls kann unter leichter Kompression des schalldämpfenden Materials Innengehäusedeckels 64 auch eine Presspassung verwirklicht sein, so dass das Innengehäuse 60 über die Tasche an dem schalldämpfenden Gehäuse 14 fixiert ist. Die Tasche kann beispielsweise durch an dem Boden 52 mittels Spritzgiessen einteilig an dem Gehäuse 14 ausgebildete Ausnehmungen, Rippen, Stege oder dergleichen gebildet werden. Alternativ ist es möglich, eine Tasche durch einzelne und/oder zwischen einzelne Schalldämpfungsplatten 34 auszuformen.

Bei der Montage des Ausführungsbeispiels wird zunächst das vorgefertigte Bauteil in das zweite Gehäuseelement 20 eingesetzt. Danach werden die Kontaktfedem 40 in die jeweiligen Querschlitze eingeschoben. Die Anschlussleitungen 78 bzw. die Masseleitungen 86 werden hierbei in den Kabelschlitz 56 eingeschoben und hierin aufgenommen.

Zum Herausführen der Leitungen 80 bzw. 86 ist eine erste Kabeldurchführöffnung 90 an dem zweiten Gehäuseelement 20 ausgespart; für die Steuerleitungen 82 ist eine zweite Kabeldurchführöffnung 92 freigeschnitten. Die beiden Öffnungen 90, 92 werden jeweils oberseitig durch das erste Gehäuseelement 18 abgedeckt und vereinfachen somit das Einlegen der jeweiligen Leitungen 80, 82, 86.

Das vorstehend vorgestellte Ausführungsbeispiel hat den Vorteil, dass die einzelnen Leiterplatten 76 mit den zugehörigen Steuerelementen in separaten Steuerelementaufnahmeräumen aufgenommen sind. Es wird verhindert, dass eine gemeinsame Leiterplatte für alle Steuerelemente der Steuereinrichtung auf einer gemeinsamen Leiterplatte vorgesehen sind, welche als Resonanzkörper eine Schallentwicklung unnötig verstärken würde. Da das Innengehäuse 60 mit den zugehörigen Leiterplatten 76 und den daran angeschlossenen Leitungen 78, 80, 82, 86 als vorgefertigtes Bauteil ausgebildet ist, kann dieses Bauteil zunächst vorgefertigt und die sensiblen Steuerelemente durch Aufbringen des Innengehäusedeckels 64 auf den Innengehäusegrundkörper 62 versiegelt werden. Bei der nachfolgenden Montage des vorgefertigten Bauteils an dem schalldämpfenden Gehäuse 14 sind somit die Steuerelemente vor Stoß geschützt. Auch wird verhindert, dass die Leiterplatte an ihren sensiblen Abschnitten verschmutzt. Die Leiterplatte 16 liegt lediglich mit ihrem dem Innengehäusegrundkörper 62 überragenden Abschnitt frei, der keine sensiblen elektrischen oder elektronischen Bereiche ausbildet. Aufgrund der an dem zweiten Gehäuseelement 20 gebildeten Tasche zum Einschieben des vorgefertigten Innengehäuses 60 können das Innengehäuse und das schalldämpfende Gehäuse 14 leicht gefügt werden.

Da die schallimitierenden Steuerelemente einerseits von dem Innengehäuse umgeben, andererseits schalldämpfend über den Innengehäusedeckel 64 gegenüber dem schalldämpfenden Gehäuse 14 abgestützt und des weiteren von den Schalldämpfungsplatten 34 umgeben sind, wird eine bestmögliche Schallisolierung erreicht. Die Ausbreitung von Schall wird insbesondere auch durch eine luftdichte Abdichtung des Gehäuses vermindert. Hierfür sind die von dem Radiator in das Gehäuse 14 eingeführten Flachsteckerkontakte beispielsweise durch eine mittels Zweikomponentenspritzgiessen ausgebildete Lippendichtung hindurch geführt. Über entsprechende Dichtungen können auch die Öffnungen 90 bzw. 92 zum Hindurchführen der Leitungen 80, 86 mit einer Dichtung versehen sein, die mittels Zweikomponentenspritzgiessen an dem Gehäuse 14 ausgeformt ist.

Die spezielle Ausgestaltung der Hülsen 48 erlaubt eine einfache und passgenaue Montage der mit dem vorgefertigten Bauteil eingebrachten Kontaktfedern 40. Die Ausgestaltung erlaubt auch ein automatisches Einsetzen der Kontaktfedern 40 in die Hülsen 48.

In jedem der Steuerelementaufnahmeräume 68 ist danach eine Teileinheit der Steuereinrichtung 16 aufgenommen. Jede dieser separat in dem Innengehäuse 60 aufgenommenen Steuerteileinrichtungen ist für sich schallisoliert. Die Steuerteileinrichtungen steuern bzw. regeln vorzugsweise quotal die gesamte Heizleistung der elektrischen Heizvorrichtung. Bei dem gezeigten Ausführungsbeispiel sind drei Steuerteileinrichtungen vorgesehen, die danach jeweils für sich ein Drittel der Heizleistung der gesamten Heizvorrichtung steuern. Dadurch kann eine bessere Anpassung der von der elektrischen Heizvorrichtung verbrauchten elektrischen Energie an eine Generatorleistung des Kraftfahrzeuges erreicht werden. Die elektrische Heizleistung kann bei dem gezeigten Ausführungsbeispiel danach mit ein Drittel, zwei Drittel und drei Drittel der maximalen Heizleistung geschaltet werden. Unter Berücksichtigung der Schaltleistung der Relais kann die Heizleistung der Schaltkreise untereinander jedoch auch unterschiedlich ausgestaltet sein. Die Stufung der jeweiligen Heizleistungen eines einzelnen Schaltkreises sollte dabei so gewählt werden, dass die gesamte Heizleistung trotz Aufteilung auf lediglich drei Schaltkreise durch geschicktes Zu- und Abschalten der einzelnen Schaltkreise in möglichst kleinen Stufen geschaltet werden kann. Bei dem gezeigten Ausführungsbeispiel sind als Steuerelement ausschließlich Relais vorgesehen.

### Bezugszeichenliste

- 2: Kunststoffgehäuse
- 4: Wärmeabgebende Elemente
- 6: Längstreben
- 8: Gehäuseöffnung
- 10: Federstreifen
- 12: Einführschlitz
- 14: Schalldämpfendes Gehäuse
- 16: Steuereinrichtung
- 18: Erstes Gehäuseelement
- 20: Zweites Gehäuseelement
- 22: Flanschsegmente
- 24: Dichtnut
- 26: Rastzunge
- 28: Versteifungsrippe
- 30: Gehäusedeckel
- 32: Kragen
- 34: Schalldämpfungsplatte
- 36: Dichtrand
- 38: Halterung
- 40: Kontaktfeder
- 42: Einbringöffnung
- 44: Längssteg
- 46: Stegrand
- 48: Hülse
- 50: Versteifungsrippe
- 52: Boden
- 54: Querschlitz
- 56: Kabelschlitz
- 60: Innengehäuse
- 62: Innengehäusegrundkörper
- 64: Deckel
- 66: Trennwand
- 68: Steuerelementaufnahmeraum
- 70: Weitere Trennwand
- 72: Seitenwand
- 74: Anlagefläche
- 76: Leiterplatte
- 78: Anschlussleitung
- 80: Anschlussleitung
- 82: Steuerleitung
- 84: Zufuhrleitung
- 86: Masseleitung
- 88: Vertikale Seitenwand
- 90: Erste Kabeldurchführöffnung
- 92: Zweite Kabeldurchführöffnung

## Patentansprüche

1. Elektrische Heizvorrichtung, insbesondere für ein Kraftfahrzeug, mit einem von einer Halteeinrichtung (2) gehaltenen Schichtaufbau umfassend mehrere wärmeerzeugende Elemente und zwischen diesen angeordnete wärmeabgebende Elemente (4) und eine Steuereinrichtung (16) zur Steuerung der wärmeerzeugenden Elemente, die von einem im wesentlichen umfänglich geschlossenen Gehäuse (14) umgeben ist,
**dadurch gekennzeichnet,**
**dass** die Steuereinrichtung (16) unter Zwischenlage von Schalldämpfungselementen (34) in dem Gehäuse (14) abgestützt ist.

2. Elektrische Heizvorrichtung nach Anspruch 1, **dadurch gekennzeichnet, dass** das Gehäuse (14) eine mit Befestigungsmitteln (26) zur Befestigung des Gehäuses (14) an die Halteeinrichtung (2) versehenes erstes Gehäuseelement (18) und ein mit diesem verbundenes und die Steuereinrichtung (16) aufnehmendes zweites Gehäuseelement (20) umfasst, in dem die Steuereinrichtung (16) schalldämpfend abgestützt ist.

3. Elektrische Heizvorrichtung nach Anspruch 1 oder 2, **dadurch gekennzeichnet, dass** die Gehäuseelemente (18, 20) unter Zwischenlage einer schalldämpfenden Lage gegeneinander angelegt sind

4. Elektrische Heizvorrichtung nach einem der vorigen Ansprüche, **dadurch gekennzeichnet, dass** das zweite Gehäuseelement (20) mit Schalldämpfungsplatten (34) ausgekleidet ist.

5. Elektrische Heizvorrichtung nach einem der vorherigen Ansprüche, **dadurch gekennzeichnet, dass** innerhalb eines von Schalldämpfungsplatten (34) aufgenommenen Aufnahmeraums des schalldämpfenden Gehäuses (14) wenigstens ein die Steuereinrichtung (16) haltendes Innengehäuse (40) aufgenommen ist.

6. Elektrische Heizvorrichtung nach Anspruch 5, mit wenigstens einer Leiterplatte (76) mit daran befestigten Steuerelementen, **dadurch gekennzeichnet, dass** das Innengehäuse (60) schalldämpfend ausgebildet ist, und dass wenigstens eine Leiterplatte (76) einen durch das Innengehäuse (60) gebildeten Steuerelementaufnahmeraum (68) abdeckt.

7. Elektrische Heizvorrichtung nach Anspruch 6 mit mehreren separat ansteuerbaren Heizblöcken umfassend wenigstens ein wärmeerzeugendes Element und diesen Heizblöcken zugeordneten separaten Steuereinrichtungen, **dadurch gekennzeichnet, dass** die Steuereinrichtungen durch voneinander schallisoliert gehaltene Steuerteileinrichtungen gebildet ist.

8. Elektrische Heizvorrichtung nach Anspruch 7, **dadurch gekennzeichnet, dass** separate Steuerelementaufnahmeräume (68) für jeweils eine Steuerteileinrichtung vorgesehen und durch jeweils die der Steuerteileinrichtung zugeordnete Leiterplatte (76) abgedeckt sind und dass die Leiterplatten (76) voneinander durch eine eine von dem Innengehäuse (60) ausgebildete Anlagefläche (74) für die Leiterplatte (76) überragende Trennwand (66) beabstandet sind.

9. Elektrische Heizvorrichtung nach einem der vorigen Ansprüche, **gekennzeichnet durch** einen Gehäusedeckel (64), welcher eine von Steuerelementen freie Rückseite der Leiterplatten (76) abdeckt.

10. Elektrische Heizvorrichtung nach Anspruch 8 oder 9, **dadurch gekennzeichnet, dass** der Innengehäusedeckel (64) an der wenigstens einen Trennwand (66) anliegt und dass die Leiterplatte (76) zum Anschluss an eine Anschluss- und/oder Steuerleitung (78, 80, 82) das Innengehäuse (60) überragt.

11. Elektrische Heizvorrichtung nach Anspruch 9 oder 10, **dadurch gekennzeichnet, dass** der Innengehäusedeckel (64) die Leiterplatte (76) zumindest an ihrem das Innengehäuse (60) überragenden Abschnitt überragt und dass die Leiterplatte (76) und der Innengehäusedeckel (64) endseitig in eine von dem schalldämpfenden Gehäuse (40) ausgebildete Tasche eingreifen.

12. Elektrische Heizvorrichtung nach einem der Ansprüche 9 bis 11, **dadurch gekennzeichnet, dass** der Innengehäusedeckel (64) verschwenkbar an dem Innengehäuse (60) gelagert ist und dass die Steuereinrichtung (16) mit daran befestigten Anschluss- und/oder Steuerleitungen (78, 80, 82, 84) zusammen mit dem das Innengehäuse (60) verschließenden Innengehäusedeckel (64) als vorgefertigtes Bauteil ausgebildet ist.

13. Elektrische Heizvorrichtung nach einem der vorigen Ansprüche, **dadurch gekennzeichnet, dass** das zweite Gehäuseelement (20) Halterungen (38) für endseitig an jeweils von der Steuereinrichtung (16) abgehenden Anschlussleitungen (78, 80) angeschlossene Kontaktfedem (40) aufweist, in die die Kontaktfedem (40) einschiebbar sind, und dass an dem Gehäuseelement (18) korrespondierend zu den Halterungen (38) vorgesehene Einbringöffnungen (42) für in die Kontaktfedern (40) einschiebbare, elektrisch mit den wärmeerzeugenden Elementen verbindbare Kontaktzungen ausgespart sind.

14. Elektrische Heizvorrichtung nach Anspruch 13, **dadurch gekennzeichnet, dass** die Halterung (38) durch eine geschlitzte Hülse (48) gebildet ist, die von einem Boden (52) des zweiten Gehäuseelementes (20) abragt und einteilig an dem zweiten Gehäuseelement (20) ausgeformt ist.

## Claims

1. Electrical heating device, in particular for a motor vehicle, with a layer structure held by a retaining device (2), said layer structure comprising several heat generating elements and heat dissipating elements (4) arranged between them and a control device (16) for the control of the heat generating elements, which is surrounded by an essentially circumferentially enclosed housing (14),
**characterised in that**
the control device (16) is supported, with sound deadening elements (34) as an intermediate layer, in the housing (14).

2. Electrical heating device according to Claim 1, **characterised in that** the housing (14) comprises a first housing element (18) provided with mounting means (26) for mounting the housing (14) to the retaining device (2) and a second housing element (20), which is joined to said first housing element (18) and accommodates the control device (16), in which the control device (16) is supported in a soundproof manner.

3. Electrical heating device according to Claim 1 or 2, **characterised in that** the housing elements (18, 20) are located opposite one another with an intervening sound deadening layer between them.

4. Electrical heating device according to any one of the preceding claims, **characterised in that** the second housing element (20) is clad with sound deadening plates (34).

5. Electrical heating device according to any one of the preceding claims, **characterised in that** within an accommodation space of the sound deadening housing (14) provided by sound deadening plates (34) at least one inner housing (40) holding the control device (16) is accommodated.

6. Electrical heating device according to Claim 5, with at least one circuit board (76) with control elements mounted on it, **characterised in that** the inner housing (60) is formed in a sound deadening manner and that at least one circuit board (76) covers a control element accommodation space (68) formed by the inner housing (60).

7. Electrical heating device according to Claim 6 with several separately controllable heating blocks comprising at least one heat generating element and separate control devices assigned to these heating blocks, **characterised in that** the control devices are formed by control subunit devices held soundproofed from one another.

8. Electrical heating device according to Claim 7, **characterised in that** separate control element accommodation spaces (68) are provided for each control subunit device and are each covered by the circuit board (76) assigned to the control subunit device and that the circuit boards (76) are spaced from one another by a partition wall (66) protruding beyond a locating face (74) for the circuit board (76), formed by the inner housing (60).

9. Electrical heating device according to any one of the preceding claims, **characterised by** a housing cover (64) which covers a rear side of the circuit boards (76) which is free of control elements.

10. Electrical heating device according to Claim 8 or 9, **characterised in that** the inner housing cover (64) contacts the at least one partition wall (66) and that the circuit board (76) protrudes beyond the inner housing (60) for the connection of a connecting and / or control lead (78, 80, 82).

11. Electrical heating device according to Claim 9 or 10, **characterised in that** the inner housing cover (64) protrudes beyond the circuit board (76) at least at its section where it protrudes beyond the inner housing (60) and that the circuit board (76) and the inner housing cover (64) engage at the end in a receptacle formed by the sound deadening housing (40).

12. Electrical heating device according to Claims 9 to 11, **characterised in that** the inner housing cover (64) is supported for swivelling on the inner housing (60) and that the control device (16) with the connecting and / or control leads (78, 80, 82, 84) attached to it together with the inner housing cover (64), which closes off the inner housing (60), is formed as a prefabricated component.

13. Electrical heating device according to any one of the preceding claims, **characterised in that** the second housing element (20) has holders (38) for contact springs (40) connected to each of the connecting leads (78, 80) leaving the control device (16) at the end, in which the contact springs (40) can be pushed, and that on the housing element (18) corresponding to the holders (38) insertion openings (42) are provided cut out for the lugs which can be pushed into the contact springs (40) and which can be electrically connected to the heat generating elements.

14. Electrical heating device according to Claim 13, **characterised in that** the holder (38) is formed by a slotted tube (48), which protrudes from a bottom (52) of the second housing element (20) and is formed in one part on the second housing element (20).

## Revendications

1. Dispositif de chauffage électrique, en particulier pour un véhicule automobile, avec une structure par couches maintenue par un dispositif de maintien (2), comprenant plusieurs éléments calorifiques et des éléments exothermiques (4) disposés entre ceux-ci, et un dispositif de commande (16) pour commander les éléments calorifiques qui sont entourés par un boîtier (14) substantiellement fermé en circonférence,
**caractérisé en ce que**
le dispositif de commande (16) est supporté dans le boîtier (14) avec insertion d'éléments d'isolation phonique (34).

2. Dispositif de chauffage électrique selon la revendication 1, **caractérisé en ce que** le boîtier (14) comprend un premier élément de boîtier (18) muni de moyens de fixation (26) pour la fixation du boîtier (14) au dispositif de maintien (2) et un deuxième élément de boîtier (20) relié à celui-ci et recevant le dispositif de commande (16) et dans lequel le dispositif de commande (16) est supporté avec une isolation phonique.

3. Dispositif de chauffage électrique selon la revendication 1 ou 2, **caractérisé en ce que** les éléments de boîtier (18, 20) sont appliqués l'un contre l'autre avec insertion d'une couche d'isolation phonique.

4. Dispositif de chauffage électrique selon l'une quelconque des revendications précédentes, **caractérisé en ce que** le deuxième élément de boîtier (20) est garni de panneaux d'isolation phonique (34).

5. Dispositif de chauffage électrique selon l'une quelconque des revendications précédentes, **caractérisé en ce qu'**à l'intérieur d'un espace de réception, reçu par des panneaux d'isolation phonique (34), du boîtier d'isolation phonique (14), au moins un boîtier intérieur (40) maintenant le dispositif de commande (16) est reçu.

6. Dispositif de chauffage électrique selon la revendication 5, avec au moins une carte de circuits imprimés (76) avec des éléments de commande fixés sur celle-ci, **caractérisé en ce que** le boîtier intérieur (60) est réalisé avec une isolation phonique, et **en ce qu'**au moins une carte de circuits imprimés (76) recouvre un espace de réception d'éléments de commande (68) formé par le boîtier intérieur (60).

7. Dispositif de chauffage électrique selon la revendication 6, avec plusieurs blocs de chauffage pouvant être commandés séparément, comprenant au moins un élément calorifique et des dispositifs de commande séparés attribués auxdits blocs de chauffage, **caractérisé en ce que** les dispositifs de commande sont formés par des dispositifs de commande partiels, séparés entre eux par une isolation phonique.

8. Dispositif de chauffage électrique selon la revendication 7, **caractérisé en ce que** des espaces de réception d'éléments de commande séparés (68) pour respectivement un dispositif de commande partiel sont prévus et recouverts par la carte de circuits imprimés (76) respectivement attribuée au dispositif de commande partiel, et **en ce que** les cartes de circuits imprimés (76) sont espacées entre elles par une cloison (66) dépassant d'une surface d'application (74), réalisée par le boîtier intérieur (60), pour la carte de circuits imprimés (76).

9. Dispositif de chauffage électrique selon l'une quelconque des revendications précédentes, **caractérisé par** un couvercle de boîtier (64) qui recouvre une face arrière des cartes de circuits imprimés (76), exempte d'éléments de commande.

10. Dispositif de chauffage électrique selon la revendication 8 ou 9, **caractérisé en ce que** le couvercle de boîtier intérieur (64) s'applique contre ladite au moins une cloison (66), et **en ce que** la carte de circuits imprimés (76) dépasse du boîtier intérieur (60) en vue d'une connexion à une ligne de connexion et/ou de commande (78, 80, 82).

11. Dispositif de chauffage électrique selon la revendication 9 ou 10, **caractérisé en ce que** le couvercle de boîtier intérieur (64) dépasse de la carte de circuits imprimés (76) au moins au niveau de sa portion dépassant du boîtier intérieur (60), et **en ce que** la carte de circuits imprimés (76) et le couvercle de boîtier intérieur (64) s'engagent du côté terminal dans une poche réalisée par le boîtier d'isolation phonique (40).

12. Dispositif de chauffage électrique selon l'une quelconque des revendications 9 à 11, **caractérisé en ce que** le couvercle de boîtier intérieur (64) est monté pivotant sur le boîtier intérieur (60), et **en ce que** le dispositif de commande (16) avec des lignes de connexion et/ou de commande (78, 80, 82, 84) fixées à celui-ci est réalisé comme un composant préfabriqué en conjonction avec le couvercle de boîtier intérieur (64) fermant le boîtier intérieur (60).

13. Dispositif de chauffage électrique selon l'une quelconque des revendications précédentes, **caractérisé en ce que** le deuxième élément de boîtier (20) présente des fixations (38) pour des ressorts de contact (40) connectés côté terminal à des lignes de connexion (78, 80) partant respectivement du dispositif de commande (16) et dans lesquels les ressorts de contact (40) peuvent être insérés, et **en ce que** sur l'élément de boîtier (18), des ouvertures d'introduction (42) sont réservées, prévues en correspondance avec les fixations (38), pour des lames de contact pouvant s'insérer dans les ressorts de contact (40) et pouvant être reliées électriquement aux éléments calorifiques.

14. Dispositif de chauffage électrique selon la revendication 13, **caractérisé en ce que** la fixation (38) est formée par une douille fendue (48) qui fait saillie à partir d'un fond (52) du deuxième élément de boîtier (20) et est rapportée intégralement sur le deuxième élément de boîtier (20).
